# EUROPÄISCHE PATENTSCHRIFT

(11) **EP 2 700 469 B1**
(45) Veröffentlichungstag und Bekanntmachung des Hinweises auf die Patenterteilung: **26.06.2019**
(21) Anmeldenummer: 13004065.2
(22) Anmeldetag: 16.08.2013
(51) Int. Cl.: B23K 23/00

(54) **Anordnung zur Speicherung sowie zum Archivieren von Daten einer aluminothermischen Schweissung**
Assembly for the storage and archiving of data related to an aluminothermic welding
Agencement pour le stockage et pour l'archivage de données d'une soudure aluminothermique

(30) Priorität: 25.08.2012 DE 102012016701
(43) Veröffentlichungstag der Anmeldung: 26.02.2014
(73) Patentinhaber: Elektro-Thermit GmbH & Co. KG, 06132 Halle (DE)
(72) Erfinder: Keichel, Jörg, D-04420 Markranstädt (DE)
(74) Vertreter: Sobisch, Peter

(56) Entgegenhaltungen:
- EP-A1- 0 879 666
- EP-A1- 2 468 443
- WO-A1-02/26437
- FR-A1- 2 533 478

## Beschreibung

Die Erfindung bezieht sich auf eine Anordnung zur Speicherung der Daten einer aluminothermischen Schweißung im verlegten Gleis.

Die dauerhafte Speicherung von beispielsweise qualitätsrelevanten Daten betreffend eine an einem Gleis durchgeführte aluminothermische Schweißung ist aus vielfältigen Gründen von großem Interesse, wobei es sich beispielsweise um den Tag der Schweißung, die eingesetzte Schweißportion, den ausführenden Schweißer, Messdaten usw. handeln kann. Dies setzt eine dauerhafte Verbindung von Schweißstelle und Daten voraus, welche auch bei einer Verlegung des die Schweißstelle enthaltenden Gleises unverändert beibehalten werden müssen. Auch muss sichergestellt sein, dass der Ersatz einer Schweißung durch eine neue Schweißung an der gleichen Stelle anhand der mit dieser verbundenen Daten erkennbar ist. Schließlich muss bei einer Verlegung eines eine Schweißstelle enthaltenden Gleises eine Rückverfolgbarkeit der Daten dieser Schweißung gegeben sein, so dass eine Zuordnung der Daten zu einer Schweißstelle im Zeitablauf unveränderbar ist.

Die mechanische Anbringung einer Identifikationsnummer an der Schweißstelle ist außerordentlich aufwändig, nicht fälschungssicher und praktisch kaum zu kontrollieren.

Aus der EP 2 468 443 A1 sind ein System und ein Verfahren zum Kommunizieren und Verwalten von Schweissinformation bekannt, welches aus einem Schweissgerät und einer Fernzugriffseinheit besteht, zwischen denen ein drahtloser Kommunikationskanal besteht. In das Schweissgerät baulich integriert sind eine, einen zum Einstellen von Schweissparametern und zum Speichern von Informationen über einen Schweissvorgang bestimmter, vor einem unberechtigten Zugriff geschützter Speicher eingerichtete Steuerung sowie ein Kommunikationsmodul. Die Fernzugriffseinheit umfasst einen Speicher, ein Kommunikationsmodul sowie eine zum Aufbereiten der von dem Schweißgerät erhaltenen Informationen und zum Erstellen einer Dokumentation der Schweißvorgänge eingerichtete Verarbeitungseinheit. Sie beinhaltet ferner eine Kamera, ein Ortungsmodul, beispielsweise in der Form eines GPS-Moduls, eine Datenbank und kann mit Web-Konnektivität ausgerüstet sein. Sie bildet eine Fernbedieneinheit, mittels welcher Schweißparameter verschickt oder auch an externe Datenbanken weitergeleitet werden können. Wesentlich für dieses bekannte System ist, dass alle Daten betreffend einen Schweißvorgang in dem Speicher des Schweißgerätes gespeichert sind. Dies betrifft auch den Ort der jeweiligen Schweißung, der unter Mitwirkung des Ortungsmoduls und/oder der Kamera hinreichend genau dokumentierbar ist. Die den einzelnen Schweißvorgang betreffenden Schweißparameter werden über die Fernzugriffseinheit bzw. den Speicher des Schweißgerätes vorgegeben. Die zu verschweißenden Werkstücke, erwähnt werden Rohrleitungen, die über eine Muffe zu verbinden sind, können mit Schweiß-Barcodes versehen sein, welche die Schweißparameter einer Schweißstelle definieren, welche mit der Kamera, in welche ein Barcode-Scanner integriert sein kann, ausgelesen werden. Ein mit der Schweißstelle dauerhaft zum Zweck einer Archivierung von Schweißparametern bestimmter Informationsträger ist hierbei nicht vorgesehen und auch nicht erforderlich.

Aus der EP 0 879 666 A1 sind ein Verfahren und eine Vorrichtung zur Widerstandsverschweißung von zwei Kunststoffrohren bekannt, welche mit einem Barcode versehen sind, durch den Schweißparameter wie z. B. Schweißtemperatur, Schweißdauer und Energieeintrag kodiert sind. Ein Schweißgerät steht mit einem zum optischen Erfassen des Barcodes eingerichteten Lesestift in Verbindung, wobei die Information des Barcodes in dem Gerät decodiert und dem Schweißvorgang zugrunde gelegt wird. Wesentlich für das aus diesem Dokument bekannte Verfahren ist somit, dass die zu verschweißenden Werkstücke mit einem Informationsträger versehen sind, der die für den einzelnen Schweißvorgang erforderlichen, zum Zweck dessen Steuerung benötigten Informationen enthält. Eine dauerhafte Archivierung von Informationen betreffend einen erfolgten Schweißvorgang ist bei dieser Anordnung nicht vorgesehen und auch nicht erforderlich.

Es ist die Aufgabe der Erfindung, eine Anordnung der eingangs genannten Art zu entwerfen, welche in einfacher Weise eine sichere, unverlierbare Verbindung relevanter Daten mit der Schweißstelle, ein mit geringem Aufwand praktizierbares Auslesen dieser Daten und deren zentrale Verfügbarkeit ermöglicht. Gelöst ist diese Aufgabe bei einer solchen Anordnung durch die Merkmale des Anspruchs 1.

Erfindungswesentlich ist hiernach ein unverlierbar mit dem Schienenprofil der Schweißstelle in Verbindung stehender, berührungslos auslesbarer Informationsträger, der zum Speichern qualitätsrelevanter Daten der Schweißstelle eingerichtet ist. Der Informationsträger ist zum Zusammenwirken mit einem Lesegerät bestimmt, welches mit einem zum Archivieren der genannten Daten bestimmten Speichermedium in Verbindung steht. Grundsätzlich können zum Speichern und Auslesen sämtliche dem Fachmann geläufige Techniken benutzt werden, soweit diese die für eine Anwendung bei Schienenschweißungen erforderlichen Eigenschaften, insbesondere betreffend die Datensicherheit, die schnelle Übertragung auf ein Lesegerät, einen langzeitstabilen Einsatz im verlegten Gleis sowie die unverlierbare Verbindung des Informationsträgers mit dem Schienenprofil aufweisen. Die ausgelesen Daten werden über das Lesegerät in einem Speichermedium archiviert, welches somit als Grundlage beispielsweise für Wartungsarbeiten am Gleis nutzbar ist. Wesentlich ist ferner, dass die auf dem Informationsträger geladenen Daten nicht unbefugterweise geändert werden können und eine eineindeutige, unveränderbare Zuordnung zu einer bestimmten Schweißstelle ermöglichen.

Das Lesegerät steht mit einem das genannte Speichermedium beinhaltenden Server in Verbindung, wobei diese Verbindung leitungsgebunden oder nicht leitungsgebunden eingerichtet sein kann. Der Server kann somit zur Erfassung der Daten von Schweißverbindungen einer kompletten Strecke oder eines Streckennetzes genutzt werden.

Als Informationsträger kommt ein an sich bekannter RFID-Transponder, (radiofrequency-identification) im Folgenden kurz Transponder genannt, zum Einsatz. Dieser besteht allgemein aus einem Speicher, einer Antenne und einem Schaltkreis zum Empfangen und Senden von Daten und kann in einer sehr geringen Baugröße eingesetzt werden. Zwischen diesem und dem Lesegerät besteht eine Funkstrecke, über welche der genannte Datenaustausch abgewickelt wird. Vorzugsweise handelt es sich um einen passiven Transponder, dessen Betriebsspannung dem durch das Lesegerät ausgestrahlten elektromagnetischen Feld entnommen ist, so dass dieser über keine eigene Energiequelle verfügt. Dies ist von Vorteil hinsichtlich des Betriebes einer Vielzahl solcher Anordnungen entlang einer Strecke.

Die Anbringung des Informationsträgers an der Schweißstelle muss grundsätzlich derart erfolgen, dass der Informationsträger gegenüber jeglichen äußeren, seine Funktion beeinträchtigenden Einflüssen geschützt angeordnet ist. Er ist ferner mit der Maßgabe anzuordnen, dass ein ungestörter Datenverkehr mit dem Lesegerät möglich ist. In jedem Fall ist hiernach eine zur Aufnahme des Informationsträgers bestimmte Ausnehmung vorgesehen, welche in einer Ausnehmung des Schweißwulstes, und zwar im Bereich des Steges des Schienenprofils, oder einer Ausnehmung einer Materialverstärkung des Schweißwulstes angebracht ist, welche sich beispielsweise unterhalb des Schienenkopfes befinden kann. Der Schweißwulst als solcher bildet bereits eine Materialverstärkung des Schienenprofils, so dass auf diesem Wege sichergestellt ist, dass dessen statische Eigenschaften durch die Anbringung der Ausnehmungen nicht beeinträchtigt werden.

Um ein unbefugtes Ändern oder Löschen von Daten des Informationsträgers zu verhindern, ist vorgesehen, die Daten in gesicherter Form zu speichern. Dies kann vorzugsweise softwaremäßig dadurch erreicht werden, dass der Zugang zu den Daten durch ein Passwort geschützt ist. Der Speicher des Informationsträgers ist nicht nur auslesbar, sondern auch beschreibbar, wobei auf diese Weise sichergestellt ist, dass sowohl ein Auslesen als auch ein Beschreiben nur durch dazu autorisierte Stellen bewirkt werden kann. Alternativ oder auch diese Maßnahmen ergänzend kann eine Datensicherung auch hardwaremäßig dadurch eingerichtet sein, dass ein spezielles Datenlese- sowie Datenschreibgerät erforderlich ist, um einen in einen Datenaustausch mit dem Informationsträger zu treten. Diese Maßnahmen zielen darauf ab, dass die Daten der Schweißstelle gesichert sind und eine eineindeutige Kennzeichnung einer bestimmten Schweißstelle ermöglichen. Änderungen und/oder Ergänzungen können nur von autorisierten Stellen vorgenommen werden.

Gemäß den Merkmalen des Anspruchs 2 ist die Ausnehmung im Bereich des Steges des Schienenprofils angeordnet.

Das Lesegerät kann entsprechend den Merkmalen des Anspruchs 3 mit dem Server über ein öffentliches Telekommunikationsnetz in Verbindung stehen. Dies bedeutet, dass alle Daten betreffend die Schweißverbindungen eines Gleises zentral über einen Server verfügbar und zum Zweck der Wartung, der Planung, der Qualitätssicherung usw. nutzbar sind.

Das Lesegerät kann im einfachsten Fall manuell zwecks Auslesen der Daten des Informationsträgers geführt werden. Vorteilhafter, insbesondere bei einer Vielzahl voneinander entfernt gelegener Schweißstellen ist es jedoch, wenn das Lesegerät entsprechend den Merkmalen des Anspruchs 4 über seinen Träger an einem Zug angebracht ist, der während des Befahrens einer Strecke die Daten der Schweißstellen in einem automatisierten Verfahren aufnimmt.

Der Informationsträger ist entsprechend den Merkmalen des Anspruchs 5 in einen Kunststoff gekapselt und steht in dieser Form mit der Schweißstelle in Verbindung, insbesondere innerhalb der Ausnehmung des Schweißwulstes. Bei diesem Kunststoff handelt es sich beispielsweise um Epoxidharz, Phenolharz, Polyurethan-Harz oder ein Polyamid. Diese Kapselung schützt den Informationsträger vor äußeren mechanischen oder auch witterungsbedingten Einflüssen. Sie stellt keine Behinderung für den Datenverkehr mit einem Lesegerät dar.

Man erkennt, dass mit der erfindungsgemäßen Anordnung ein Arbeitsmittel zur zur Speicherung und Archivierung von Daten der Schweißstellen eines Gleises bzw. einer Strecke zur Verfügung gestellt ist, welches in vielfältiger Weise betrieblich nutzbar ist und mit welchem ein Beitrag zur Rationalisierung von Planungstätigkeiten geleistet ist.

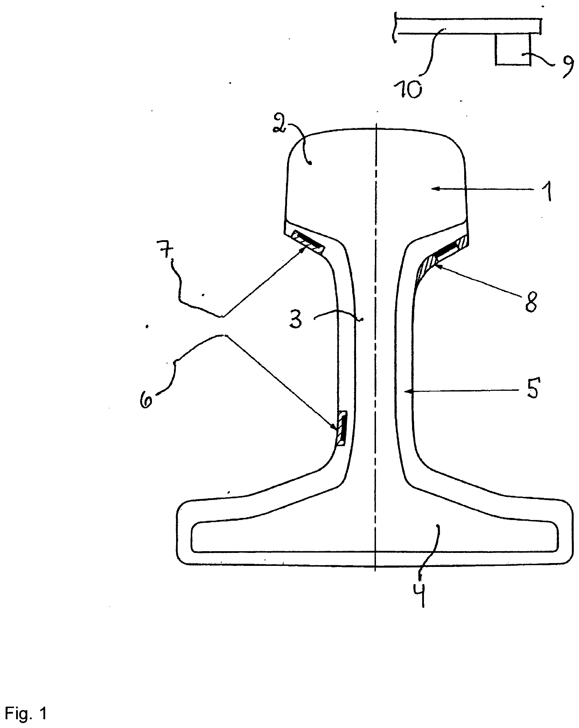

Die Zeichnung Fig. 1 zeigt den Querschnitt eines Schienenprofils 1 im Bereich einer aluminothermischen Schweißstelle, welches in bekannter Weise aus einem Schienenkopf 2, einem Steg 3 und einem Schienenfuß 4 besteht.

Mit 5 ist ein die Schweißstelle kennzeichnender Schweißwulst bezeichnet, der alternativ an den Stellen 6 oder 7 mit Ausnehmungen versehen sein kann, in welchen ein Transponder eingesetzt ist. Diese Stellen sind mit der Maßgabe gewählt, dass von den Ausnehmungen kein die mechanische Festigkeit des Schienenprofils 1 bzw. der Schweißstelle beeinträchtigender Einfluss ausgeht.

Als weitere Alternative zur Anbringung eines Transponders kommt auch wie an der Stelle 8 dargestellt eine Materialverstärkung in Betracht, die mit einer den Transponder aufnehmenden Ausnehmung versehen ist.

Der Transponder ist in der jeweiligen Ausnehmung in jedem Fall unverlierbar aufgenommen und gegenüber Witterungseinflüssen geschützt angeordnet. Ein Schutz ist ferner gegenüber äußeren Einwirkungen gegeben, die aus Arbeiten am Gleis resultieren, z. B. in Verbindung mit einem Stopfen oder Erneuern des Gleisschotters Beispielsweise kann der Transponder in der Ausnehmung in einen Kunststoff gekapselt angeordnet sein.

Mit 9 ist ein zum nicht leitungsgebundenen Datenaustausch mit dem Transponder eingerichtes, an einem Träger 10 gehaltenes Lesegerät bezeichnet. Die Anordnung und Beschaffenheit des Transponders ist in Abstimmung mit der Anbringung des Lesegerätes 9 dahingehend angelegt, dass eine zwischen diesen bestehende Funkstrecke insbesondere gegenüber einer Einwirkung von Fremdfeldern störungsfrei nutzbar ist. Der Träger 10 kann beispielsweise ein fahrender Zug sein.

Das Lesegerät 9 steht in zeichnerisch nicht dargestellter Weise unter Nutzung öffentlicher Telekommunikationsverbindungen mit einem Zentralserver in Verbindung, über welchen die beim Überfahren der einzelnen Schweißstellen über den jeweiligen Transponder aufgenommen Daten archiviert werden und aufrufbar sind.

**Bezugszeichenliste:**

| | | | |
|---|---|---|---|
| 1. | Schienenprofil | 7. | Stelle |
| 2. | Schienenkopf | 8. | Stelle |
| 3. | Steg | 9. | Lesegerät |
| 4. | Schienenfuß | 10. | Träger |
| 5. | Schweißwulst | | |
| 6. | Stelle | | |

## Patentansprüche

1. Anordnung zur Speicherung und Archivierung der Daten einer aluminothermischen Schweißstelle, mit einem Daten der Schweißstelle speichernden Informationsträger, einem zum Datenaustausch mit dem Informationsträger eingerichteten Lesegerät (9) und der zwischen zwei Schienenenden bestehenden Schweißstelle, wobei der Informationsträger mit dem Schienenprofil (1) der Schienenenden in unverlierbarer Verbindung steht, das Lesegerät (9) an einem relativ zu der Schweißstelle beweglich angeordneten Träger (10) befestigt ist und mit einem zum Archivieren der Daten bestimmten Speichermedium in Verbindung steht, der Informationsträger in einer Ausnehmung des Schweißwulstes (5) der Schweißstelle oder in einer Ausnehmung einer Materialverstärkung des Schweißwulstes der Schweißstelle angeordnet und ein passiver, auslesbarer und beschreibbarer RFID-Transponder ist und die Daten des Informationsträgers in gesicherter Form gespeichert sind.

2. Anordnung nach Anspruch 1, **dadurch gekennzeichnet, dass** die Ausnehmung im Bereich des Steges (3) des Schienenprofils (1) angeordnet ist.

3. Anordnung nach Anspruch 1 oder 2, **dadurch gekennzeichnet, dass** das Lesegerät (9) zum Datenaustausch mit dem Server über ein öffentliches Telekommunikationsnetz eingerichtet ist.

4. Anordnung nach einem der Ansprüche 1 bis 3, **dadurch gekennzeichnet, dass** der Träger (10) mit einem Zug in Verbindung steht.

5. Anordnung nach einem der Ansprüche 1 bis 4, **dadurch gekennzeichnet, dass** der Informationsträger in einem Kunststoff gekapselt mit dem Schienenprofil (1) der Schweißstelle in unverlierbarer Verbindung steht.

## Claims

1. Arrangement for storing and archiving data relating to an aluminothermic weld site, having an information support storing data relating to the weld site, a reading device (9), which is arranged for data exchange with the information support, and the weld site existing between two rail ends, wherein the information support is captively connected to the rail profile (1) of the rail ends, the reading device (9) is fastened to a support (10) disposed in a movable manner relative to the weld site and is connected to a storage medium intended for the archiving of the data, the information support is disposed in a recess in the weld bead (5) of the weld site or in a recess of a material reinforcement of the weld bead of the weld site and is a passive, readable and writable RFID transponder, and the data of the information support are stored in secured form.

2. Arrangement as claimed in claim 1, **characterised in that** the recess is located in the region of the web (3) of the rail profile (1).

3. Arrangement as claimed in claim 1 or 2, **characterised in that** the reading device (9) is arranged for data exchange with the server via a public telecommunications network.

4. Arrangement as claimed in any one of claims 1 to 3, **characterised in that** the support (10) is connected to a train.

5. Arrangement as claimed in any one of claims 1 to 4, **characterised in that** the information support, being encapsulated in a synthetic material, is captively connected to the rail profile (1) of the weld site.

## Revendications

1. Ensemble servant à stocker et archiver les données d'une soudure aluminothermique, avec un support d'informations stockant des données de la soudure, un appareil de lecture (9) mis au point pour l'échange de données avec le support d'informations et la soudure existant entre deux extrémités de rail, dans lequel
le support d'informations est relié de manière imperdable au profilé de rail (1) des extrémités de rail, l'appareil de lecture (9) est fixé au niveau d'un support (10) disposé de manière mobile par rapport à la soudure et est relié à un support de stockage destiné à l'archivage des données, le support d'informations est disposé dans un évidement du cordon de soudage (5) de la soudure ou dans un évidement d'un renfort de matériau du cordon de soudure de la soudure et est un transpondeur RFID passif lisible et inscriptible et les données du support d'informations sont stockées sous une forme sécurisée.

2. Ensemble selon la revendication 1, **caractérisé en ce que** l'évidement est disposé dans la zone de l'entretoise (3) du profilé de rail (1).

3. Ensemble selon la revendication 1 ou 2, **caractérisé en ce que** l'appareil de lecture (9) est mis au point pour l'échange de données avec le serveur par l'intermédiaire d'un réseau de télécommunication public.

4. Ensemble selon l'une quelconque des revendications 1 à 3, **caractérisé en ce que** le support (10) est relié à un train.

5. Ensemble selon l'une quelconque des revendications 1 à 4, **caractérisé en ce que** le support d'informations est relié, encapsulé dans une matière plastique, de manière imperdable au profilé de rail (1) de la soudure.
